# FASCICULE DE BREVET EUROPEEN

(11) **EP 2 864 171 B1**
(45) Date de publication et mention de la délivrance du brevet: **16.01.2019**
(21) Numéro de dépôt: 13733348.0
(22) Date de dépôt: 06.06.2013
(51) Int. Cl.: B60W 20/13, B60W 30/18, B60W 50/14, B60W 10/06, B60W 10/08, B60W 10/26, B60L 11/18, B60L 11/12, B60L 11/14

(54) **PROCÉDÉ DE RECHARGE D'UNE BATTERIE DE VÉHICULE HYBRIDE A L'ARRÊT**
VERFAHREN ZUM LADEN EINER BATTERIE EINES HYBRIDFAHRZEUGS BEIM STILLSTAND DES FAHRZEUGS
METHOD FOR RECHARGING A BATTERY OF A HYBRID VEHICLE WHEN THE VEHICLE IS STATIONARY

(30) Priorité: 20.06.2012 FR 1255782
(43) Date de publication de la demande: 29.04.2015
(73) Titulaire: Renault S.A.S., 92100 Boulogne-Billancourt (FR)
(72) Inventeur: CHUPIN, Paul-Eric, F-92500 Rueil-Malmaison (FR); AUZAS, Frédéric, F-75014 Paris (FR)
(86) Numéro de dépôt international: PCT/FR2013/051282
(87) Numéro de publication internationale: WO 2013/190205

(56) Documents cités:
- EP-A1- 2 426 002
- EP-A2- 2 423 027
- DE-A1-102010 044 089
- US-A1- 2009 108 803
- US-A1- 2011 140 660
- US-A1- 2012 016 551

## Description

La présente invention concerne les véhicules hybrides équipés d'un groupe motopropulseur hybride, comprenant un moteur thermique et au moins une machine électrique, pouvant assurer simultanément, ou indépendamment, le déplacement du véhicule dans des modes de fonctionnement électrique, thermique et hybride, selon les conditions de roulage et l'état de charge d'une batterie de traction assurant l'alimentation de la machine électrique.

Plus précisément, elle a pour objet un procédé de commande de la recharge à l'arrêt d'une batterie de véhicule hybride.

Cette invention trouve une application privilégiée sur un véhicule hybride, où le moteur électrique doit assurer seul la traction du véhicule dans une phase de lancement ou « décollage » à partir de l'arrêt et aux faibles vitesses de déplacement, de sorte que le groupe motopropulseur ne dispose que de l'énergie électrique stockée dans les batteries du véhicule pour assurer le lancement et le déplacement du véhicule de l'arrêt, jusqu'au démarrage du moteur thermique. C'est le cas dans certaines architectures où, par construction, le moteur thermique ne peut intervenir dans la propulsion du véhicule qu'à partir d'un seuil déterminé de vitesse. Lorsque les batteries sont trop faibles pour lancer le véhicule en mode électrique jusqu'au démarrage du moteur thermique, on a recours à un mode de recharge à l'arrêt, dit « recharge bord de route » à l'aide du moteur thermique fonctionnant en générateur.

Par la publication US2011/0140660, on connaît un système de recharge de batteries pour véhicules hybrides, comportant un moteur thermique capable d'entraîner un générateur pour recharger une batterie à l'arrêt, sous la commande du conducteur. Par la publication EP 1 122 857, on connaît un procédé de gestion de l'état de charge de la batterie de traction sur un véhicule hybride, visant à assurer le démarrage du véhicule via le moteur électrique dans le cas où la batterie de traction possède un état de charge trop faible pour faire démarrer le moteur électrique et/ou le moteur thermigue. La méthode proposée utilise la batterie de bord du véhicule, destinée normalement aux équipements du véhicule, pour charger la batterie de traction. Mais elle ne permet pas de lancer le véhicule au démarrage à l'aide du seul moteur électrique, ni de démarrer le moteur thermigue, tant que la batterie de traction est trop faible pour cela.

La présente invention vise à gérer l'utilisation des deux sources d'énergie d'un véhicule hybride, à savoir la batterie et la masse de carburant présente dans le réservoir, en tenant compte des besoins de l'utilisateur et de ses prévisions.

Dans ce but, elle propose le procédé selon la revendication 1, selon lequel le démarrage du véhicule est refusé sans recharge préalable de la batterie à l'arrêt, si l'état de charge de la batterie est en dessous d'un seuil critique.

En revanche, le démarrage du véhicule à l'arrêt peut être autorisé avec une incitation à recharger préalablement la batterie à l'arrêt, si l'état de charge de la batterie est compris entre le seuil critique et un seuil de sécurité plus élevé que celui-ci.

L'invention propose également la mise en oeuvre d'une interface spécifique dédiée à cette gestion, au travers de signaux affichés et de boutons, implantés par exemple au niveau de la planche de bord.

Ainsi, la recharge de la batterie peut être activée à l'arrêt, à la demande du conducteur, par son action sur une interface dédiée.

La présente invention sera mieux comprise à la lecture de la description suivante d'un mode de réalisation non limitatif de celle-ci, en se reportant aux dessins annexés, sur lesquels :
- la figure 1 présente un bouton d'activation de la recharge à l'arrêt,
- la figure 2 est une interface visuelle,
- la figure 3 décrit la méthode en roulage,
- la figure 4 décrit la méthode à l'arrêt,
- la figure 5, montre son activation forcée,
- la figure 6 illustre la gestion du carburant, et
- la figure 7 introduit un seuil critique de carburant.

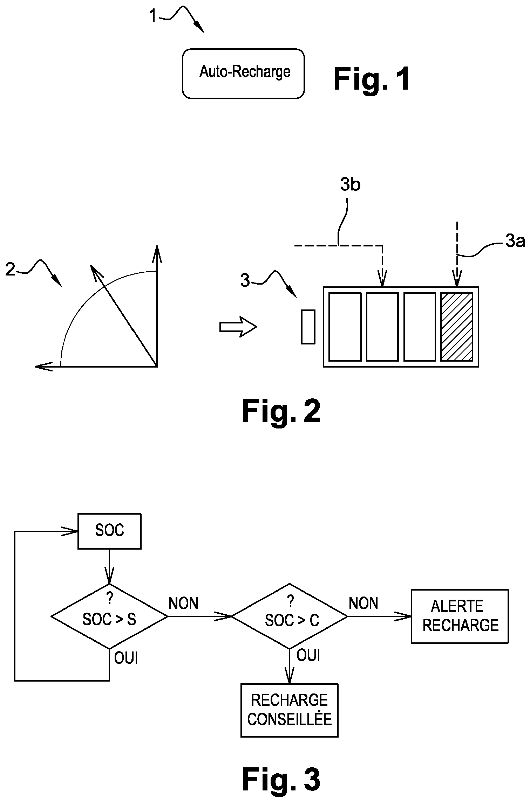

Le moyen d'interaction, tel que le bouton 1, illustré par la figure 1, est dédié à la gestion d'un mode de fonctionnement du véhicule dit de « recharge bord de route », grâce auquel le conducteur a la possibilité de choisir, ou de forcer l'utilisation du moteur thermique comme génératrice, afin de recharger sa batterie en dehors d'un cycle de roulage, c'est-à-dire à l'arrêt. Ce bouton se situe par exemple au niveau de la planche de bord, ou près du levier de vitesse. Une fois enclenché, l'activation (ou l'interruption) de la recharge doit être signalée par un message sur le tableau de bord et/ou par le contour lumineux du bouton. Sans sortir du cadre de l'invention, l'interface peut cependant être réalisée de différentes manières, par un écran tactile, une commande vocale ou autre.

La recharge de la batterie à l'arrêt utilise le moteur thermique combiné au moteur électrique, le moteur électrique fonctionnant en générateur, comme dans un groupe électrogène. Le moteur thermique possède une source d'énergie limitée, qui est la quantité de carburant disponible. Comme indiqué sur la figure 2, cette information peut être prise en compte et restituée au conducteur, par l'interface 2. L'information sur l'activation du mode de recharge bord de route est donc complétée par une information sur le niveau de carburant (jauge de carburant 2) et sur l'état de charge de la batterie (jauge d'état de charge de la batterie 3). Ces pictogrammes montrent à l'utilisateur l'état de charge réel de sa batterie 3a, la correspondance entre l'état de charge de sa batterie et la quantité de carburant disponible, et la recharge maximale 3b qu'il est possible de réaliser en consommant tout le carburant du réservoir.

Conformément à l'invention, la recharge de la batterie est activée dans les circonstances suivantes :
- soit les algorithmes de contrôle du véhicule, analysant leurs paramètres d'entrée, signalent la nécessité de recharger les batteries du véhicule (en alternative au branchement du véhicule à une borne de recharge disponible),
- soit l'utilisateur décide, de sa propre initiative, de forcer la recharge de la batterie du véhicule par une recharge à l'arrêt.

Dans le premier cas, les paramètres pris en compte incluent l'état de charge (ou SOC, « state of charge ») de la batterie, et le nombre de phases de « décollage » que le véhicule peut encore effectuer sur ses batteries à partir de leur état de charge. Dans le second, l'action de l'utilisateur au travers de l'interface est déterminante, dès lors que certaines conditions de sécurité sont remplies, telles que la position neutre ou parking du levier de vitesses, ou autre.

Dans tous les cas, la recharge de la batterie n'est activée qu'à l'arrêt donc exclusivement en dehors d'un cycle de roulage, à la demande du conducteur, et par son action sur une interface dédiée, telle que le bouton 1 de la figure 1. De manière analogue, la désactivation de la recharge pourra être imposée à tout moment par l'utilisateur par une action sur l'interface, par exemple en appuyant à nouveau sur le même ou sur un autre bouton. Elle sera aussi interrompue de manière automatique, selon des paramètres d'entrée des algorithmes de contrôle du véhicule.

L'opportunité, ou la nécessité d'activer ou de désactiver la recharge de la batterie à l'arrêt, sont déterminées au moins par l'état de charge de la batterie SOC, et par le nombre de lancements, ou « phases de décollage » n en mode électrique, que le véhicule peut effectuer à partir de cet état de charge. Si, par construction, le mode électrique (sans apport d'énergie thermique) est imposé au véhicule jusqu'à un seuil de vitesse déterminé (par exemple de 16 km/h), le moteur thermique ne peut être démarré sous ce seuil de vitesse : le nombre de « phases de décollage » n considéré, correspond au nombre de lancements du véhicule possibles, du départ arrêté, jusqu'au démarrage du moteur thermique.

Le procédé prend également en compte l'énergie électrique qui peut être consommée en roulage, dans diverses circonstances. Si la batterie de traction (par exemple de l'ordre de 400 volts) est utilisée pour alimenter les équipements du véhicule (phares, radio, alimentation des calculateurs, etc.), elle peut se décharger, même en mode thermique. Cette consommation doit donc être prise en compte. Il en va de même lorsque le véhicule roule longtemps en dessous du seuil de démarrage du moteur thermique, par exemple en embouteillage.

Sur le logigramme de la figure 3, l'état de charge SOC de la batterie, est comparé, en roulage, à un seuil de sécurité S et à un seuil critique C inférieur à celui-ci. Entre le seuil de sécurité et le seuil critique, S > SOC > C, le démarrage du véhicule à l'arrêt est autorisé avec une incitation à recharger préalablement la batterie à l'arrêt.

L'interface visuelle de la figure 2 peut indiquer par un témoin lumineux, qu'une recharge à l'arrêt est conseillée, et lui recommander de s'arrêter pour recharger ses batteries. En dessous du seuil critique, SOC < C, le démarrage du véhicule est refusé, sans recharge préalable de la batterie à l'arrêt. L'interface peut alors signaler l'alerte en indiquant que la recharge est nécessaire ou obligatoire. Elle peut aussi être renforcée par un signal sonore, pour signaler le risque d'immobilisation du véhicule.

Lorsque le véhicule est à l'arrêt, et que le conducteur décide de l'utiliser, il est important de garantir, dans toutes les conditions, un certain nombre de phases de décollage du véhicule. Il faut donc s'assurer que la batterie est au-dessus d'un certain seuil de charge, par exemple le seuil critique ou le seuil de sécurité de la figure 3. En fonction de cet état de charge et du nombre de décollage possibles, le conducteur pourra recevoir un signal :
- lui conseillant la recharge : le véhicule peut être démarré mais l'état de charge, ou le nombre de phase de décollage, sont inférieurs aux seuils de sécurité,
- lui imposant la recharge : le véhicule ne peut pas être démarré, l'état de charge étant insuffisant (en dessous du seuil critique) pour permettre la phase de décollage.

La recharge peut alors s'effectuer, soit par branchement du véhicule au secteur, soit par activation du mode de recharge à l'arrêt, pour autant que des conditions de sécurité soient remplies pour autoriser la recharge.

Si la recharge a été conseillée ou imposée au conducteur par les algorithmes de contrôle du véhicule, elle est automatiquement coupée lorsque la charge garantit une certaine utilisation du véhicule, par exemple à partir d'un certain seuil, qui peut être intermédiaire entre le seuil critique C et le seuil de sécurité S mentionnés plus haut. L'utilisateur garde toujours le contrôle de la recharge au travers de l'interface, et peut l'interrompre à tout moment. Toutefois, si les conditions pour démarrer le véhicule ne sont pas encore remplies, les alertes de recharge ne seront pas interrompues.

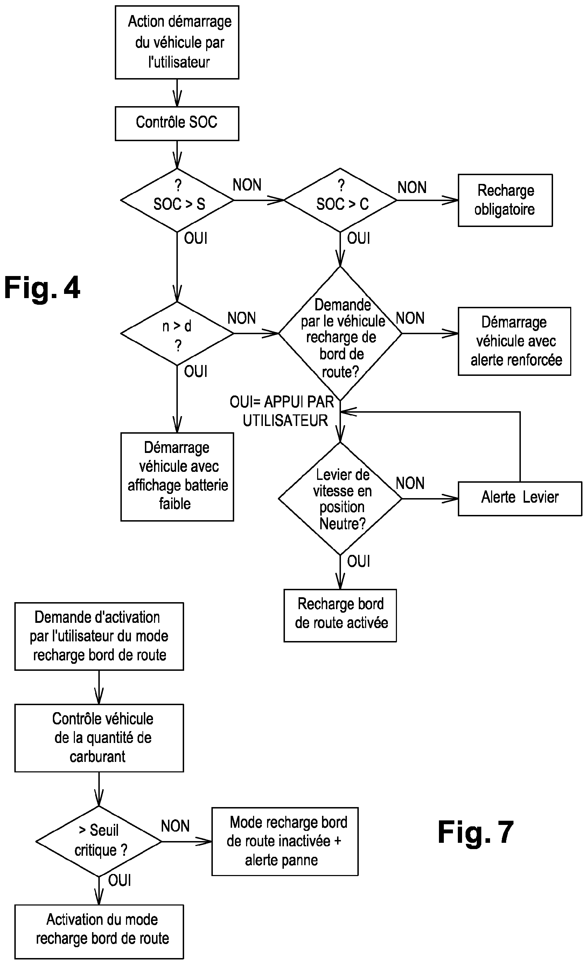

Conformément à la figure 4, lorsque le conducteur lance une action de démarrage du véhicule, l'état de charge SOC de la batterie est automatiquement contrôlé. S'il est supérieur au seuil de sécurité S, le nombre de décollages autorisé n en mode électrique est comparé à un seuil d. Si n > d, le démarrage est autorisé avec affichage de « batterie faible ». Si SOC < C, le démarrage est refusé et la recharge est obligatoire. Le véhicule peut conseiller la recharge à l'arrêt, soit par ce que l'état de charge SOC est compris entre le seuil de sécurité S et le seuil critique C, soit par ce que le nombre de décollages est insuffisant (n < d). Lorsque le conducteur demande la recharge, il est alerté si son levier de vitesses n'est pas au neutre, et la recharge n'est pas activée en dehors de cette position. Le logigramme n'est pas limitatif, d'autres conditions de sécurité pouvant être vérifiées, avant le lancement effectif de la recharge.

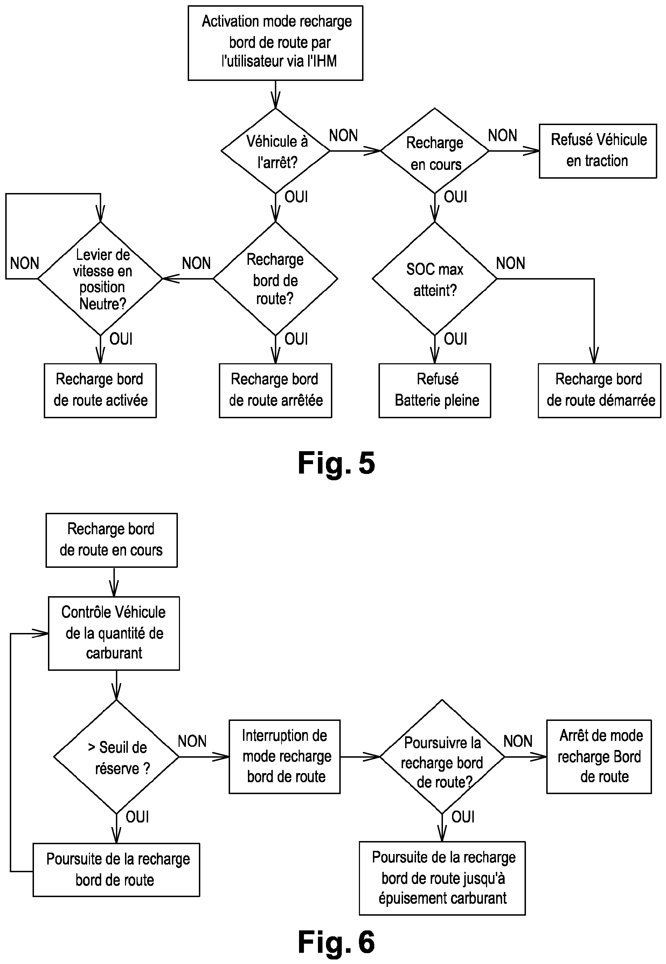

En dehors de toute alerte ou incitation du véhicule, le conducteur garde l'initiative d'activer la recharge à l'arrêt, par exemple en prévision d'un trajet plus important. Comme indiqué sur la figure 5, la recharge est alors activée à sa demande, sauf si le véhicule est en déplacement, si la batterie est déjà en pleine charge, ou si certaines conditions de sécurité ne sont pas activées. À tout moment, il peut l'interrompre au travers de l'interface, par exemple en appuyant à nouveau sur le bouton.

Comme indiqué plus haut, le conducteur est informé en roulage de la capacité de recharge de la batterie à l'arrêt, et de la correspondance entre la quantité ou carburant disponible et l'état de charge de la batterie. Il connaît ainsi la progression de la recharge de la batterie et de la diminution de la quantité de carburant dans le réservoir, de même que la recharge maximale qu'il peut effectuer en consommant la totalité du carburant disponible dans le réservoir. Cette information est particulièrement utile en roulage dans une agglomération qui n'autorise pas la propulsion thermique.

La recharge de la batterie est refusée, si une condition de sécurité n'est plus remplie, si la batterie est déjà en pleine charge. Elle est coupée automatiquement une fois la batterie pleinement chargée. Comme indiqué sur la figure 6, le réservoir de carburant présente un niveau de réserve, en dessous duquel la charge est interrompue automatiquement avec envoi d'une demande de confirmation du conducteur pour autoriser la consommation de la quantité de carburant restante pour recharger la batterie.

Enfin, comme indiqué sur la figure 7, il est utile de prévoir également un seuil critique de niveau de carburant, en dessous duquel quantité de carburant disponible est insuffisante pour faire remonter le niveau de charge (SOC) de la batterie au-delà du seuil critique (C). Dans ce dernier cas, le mode « recharge bord de route » est inactivé et seule une charge classique sur le Secteur, permettra à la batterie d'atteindre un niveau d'énergie suffisant pour mettre à nouveau le véhicule en déplacement.

## Revendications

1. Procédé de commande de la recharge à l'arrêt d'une batterie de véhicule hybride comprenant un moteur thermique et au moins une machine électrique, pouvant assurer simultanément ou indépendamment le déplacement du véhicule dans des modes de fonctionnement électrique, thermique et hybride, selon les conditions de roulage et l'état de charge (SOC) d'une batterie de traction assurant l'alimentation de la machine électrique, dans lequel la recharge de la batterie à l'arrêt est opérée en utilisant le moteur thermique combiné à la machine électrique fonctionnant en générateur, et est activée à la demande du conducteur par son action sur une interface dédiée, **caractérisé en ce que** le démarrage du véhicule est refusé sans recharge préalable de la batterie à l'arrêt, si l'état de charge de la batterie (SOC) est en dessous d'un seuil critique (C).

2. Procédé de commande selon la revendication 1, **caractérisé en ce que** le démarrage du véhicule à l'arrêt est autorisé avec une incitation à recharger préalablement la batterie à l'arrêt, si l'état de charge de la batterie est compris entre le seuil critique (C) et un seuil de sécurité (S) supérieur à celui-ci.

3. Procédé de commande selon la revendication 2, **caractérisé en ce que** le démarrage du véhicule à l'arrêt est autorisé avec une incitation à recharger préalablement la batterie à l'arrêt, si l'état de charge de la batterie est supérieur au seuil de sécurité, mais le nombre de démarrages (n) possibles en mode électrique avec cet état, est inférieur à un seuil déterminé (d).

4. Procédé de commande selon la revendication 1, 2 ou 3, **caractérisé en ce que** la recharge à l'arrêt n'est activée que si le levier de vitesses du véhicule est en position neutre.

5. Procédé de commande selon l'une des revendications précédentes, **caractérisé en ce que** le conducteur est informé en roulage de la nécessité de s'arrêter pour recharger la batterie, si l'état de charge (SOC) est inférieur au seuil critique (C).

6. Procédé de commande selon l'une des revendications précédentes, **caractérisé en ce que** le conducteur est incité en roulage à s'arrêter pour recharger sa batterie, si l'état de charge (SOC) est compris entre le seuil de sécurité S et le seuil critique (C).

7. Procédé de commande selon l'une des revendications précédentes, **caractérisé en ce que** la recharge de la batterie est refusée, si la batterie est déjà en pleine charge, ou coupée automatiquement une fois la batterie pleinement chargée.

8. Procédé de commande selon l'une des revendications précédentes, **caractérisé en ce que** la recharge de la batterie à l'arrêt est interrompue en dessous d'un niveau de réserve de carburant dans le réservoir.

9. Procédé de commande selon l'une des revendications précédentes, **caractérisé en ce que** la recharge de la batterie à l'arrêt est désactivée lorsque la quantité de carburant disponible dans le réservoir du véhicule est insuffisante pour faire remonter le niveau de charge (SOC) de la batterie au-delà du seuil critique (C).

## Patentansprüche

1. Verfahren zur Steuerung der Aufladung einer Batterie eines Hybridfahrzeugs im Stillstand, das eine Brennkraftmaschine und mindestens eine elektrische Maschine umfasst, die gleichzeitig oder unabhängig das Fahren des Fahrzeugs in einer elektrischen Betriebsart, einer Betriebsart mit Antrieb durch die Brennkraftmaschine und einer Hybrid-Betriebsart sicherstellen können, je nach den Fahrbedingungen und dem Ladezustand (SOC) einer Traktionsbatterie, welche die Stromversorgung der elektrischen Maschine sicherstellt, wobei die Aufladung der Batterie im Stillstand unter Verwendung der Brennkraftmaschine in Kombination mit der als Generator arbeitenden elektrischen Maschine durchgeführt wird und auf Anforderung des Fahrers durch dessen Einwirkung auf eine spezifische Schnittstelle aktiviert wird, **dadurch gekennzeichnet, dass** das Starten des Fahrzeugs ohne vorherige Aufladung der Batterie im Stillstand verweigert wird, falls der Ladezustand der Batterie (SOC) unterhalb eines kritischen Schwellenwertes (C) liegt.

2. Verfahren zur Steuerung nach Anspruch 1, **dadurch gekennzeichnet, dass** das Starten des Fahrzeugs im Stillstand mit einer Aufforderung, zuvor die Batterie im Stillstand aufzuladen, zugelassen wird, falls der Ladezustand der Batterie zwischen dem kritischen Schwellenwert (C) und einem Sicherheitsschwellenwert (S), der höher als dieser ist, liegt.

3. Verfahren zur Steuerung nach Anspruch 2, **dadurch gekennzeichnet, dass** das Starten des Fahrzeugs im Stillstand mit einer Aufforderung, zuvor die Batterie im Stillstand aufzuladen, zugelassen wird, falls der Ladezustand der Batterie höher als der Sicherheitsschwellenwert ist, jedoch die Anzahl möglicher Startvorgänge (n) in der elektrischen Betriebsart bei diesem Zustand kleiner als ein bestimmter Schwellenwert (d) ist.

4. Verfahren zur Steuerung nach Anspruch 1, 2 oder 3, **dadurch gekennzeichnet, dass** die Aufladung im Stillstand nur aktiviert wird, falls sich der Gangschalthebel des Fahrzeugs in der Neutralstellung befindet.

5. Verfahren zur Steuerung nach einem der vorhergehenden Ansprüche, **dadurch gekennzeichnet, dass** der Fahrer während der Fahrt über die Notwendigkeit informiert wird, anzuhalten, um die Batterie aufzuladen, falls der Ladezustand (SOC) niedriger als der kritische Schwellenwert (C) ist.

6. Verfahren zur Steuerung nach einem der vorhergehenden Ansprüche, **dadurch gekennzeichnet, dass** der Fahrer während der Fahrt aufgefordert wird anzuhalten, um seine Batterie aufzuladen, falls der Ladezustand (SOC) zwischen dem Sicherheitsschwellenwert (S) und dem kritischen Schwellenwert (C) liegt.

7. Verfahren zur Steuerung nach einem der vorhergehenden Ansprüche, **dadurch gekennzeichnet, dass** die Aufladung der Batterie verweigert wird, falls die Batterie bereits vollständig geladen ist, oder automatisch abgebrochen wird, sobald die Batterie bereits vollständig geladen ist.

8. Verfahren zur Steuerung nach einem der vorhergehenden Ansprüche, **dadurch gekennzeichnet, dass** die Aufladung der Batterie im Stillstand unterhalb eines Reservefüllstands des Kraftstoffs im Behälter unterbrochen wird.

9. Verfahren zur Steuerung nach einem der vorhergehenden Ansprüche, **dadurch gekennzeichnet, dass** die Aufladung der Batterie im Stillstand deaktiviert wird, wenn die verfügbare Menge an Kraftstoff im Behälter des Fahrzeugs nicht ausreichend ist, um zu bewirken, dass sich der Ladezustand (SOC) der Batterie über den kritischen Schwellenwert (C) hinaus erhöht.

## Claims

1. Method for controlling the recharging of a battery of a hybrid vehicle when the vehicle is stationary, said vehicle comprising a heat engine and at least one electric machine that can simultaneously or independently generate the movement of the vehicle in electric, thermal and hybrid operating modes, according to the driving conditions and the state of charge (SOC) of a traction battery providing the power supply of the electric machine, wherein the recharging of the battery when the vehicle is stationary is carried out by using the heat engine combined with the electric motor functioning as a generator, and is activated at the request of the driver acting on a dedicated interface, **characterized in that** the start-up of the vehicle is refused without prior recharging of the battery when the vehicle is stationary if the state of charge of the battery (SOC) is below a critical threshold (C).

2. Control method according to Claim 1, **characterized in that** the start-up of the stationary vehicle is authorized with a prompt beforehand to recharge the battery when the vehicle is stationary if the state of charge of the battery is between the critical threshold (C) and a safety threshold (S), which is higher than the critical threshold.

3. Control method according to Claim 2, **characterized in that** the start-up of the stationary vehicle is authorized with a prompt beforehand to recharge the battery when the vehicle is stationary if the state of charge of the battery is above the safety threshold, but the number of possible start-ups (n) in electric mode with this state is below a determined threshold (d).

4. Control method according to Claim 1, 2 or 3, **characterized in that** the recharging when the vehicle is stationary is only activated if the gear stick of the vehicle is in the neutral position.

5. Control method according to one of the preceding claims, **characterized in that** the driver is informed during driving of the need to stop in order to recharge the battery if the state of charge (SOC) is below the critical threshold (C).

6. Control method according to one of the preceding claims, **characterized in that** the driver is prompted during driving to stop in order to recharge his or her battery if the state of charge (SOC) is between the safety threshold (S) and the critical threshold (C).

7. Control method according to one of the preceding claims, **characterized in that** the recharging of the battery is refused if the battery is already fully charged, or is stopped automatically once the battery is fully charged.

8. Control method according to one of the preceding claims, **characterized in that** the recharging of the battery when the vehicle is stationary is interrupted below a reserve level of fuel in the tank.

9. Control method according to one of the preceding claims, **characterized in that** the recharging of the battery when the vehicle is stationary is deactivated when the amount of fuel available in the tank of the vehicle is insufficient to raise the level of charge (SOC) of the battery beyond the critical threshold (C).
